# EUROPÄISCHE PATENTANMELDUNG

(11) **EP 0 992 664 A1**
(43) Veröffentlichungstag der Anmeldung: **12.04.2000**
(21) Anmeldenummer: 99124104.3
(22) Anmeldetag: 21.11.1995
(51) Int. Cl.: F02D 41/14, F01N 11/00

(54) **Anordnung zur Überwachung der Funktionsfähigkeit von Lambda-Sonden**

(30) Priorität: 22.11.1994 DE 4441432
(62) Teilanmeldung aus: 95938457.9
(71) Anmelder: Heraeus Electro-Nite International N.V., 3530 Houthalen (BE)
(72) Erfinder: Häfele, Edelbert, Dr., 76228 Karlsruhe (DE)
(74) Vertreter: Kühn, Hans-Christian

(57) **Zusammenfassung**

Die Anordnung dient zur Überwachung der Funktionsfähigkeit von Lambda-Sonden in Entgiftungsanlagen für Abgasen, bei denen in Strömungsrichtung des Abgases in dem Katalysator ein Schadstoffsensor angeordnet ist. Dabei erfolgt eine definierte Änderung des Lambda-Wertes und/oder des Sauerstoffgehaltes im Abgas von Verbrennungsmotoren von Kraftfahrzeugen motorisch durch schnelles Anreichern und/oder schnelles Abmagern, wobei das elektrische Ausgangssignal des dazu verwendeten HC-Sensors mit einem in einem Speicher gespeicherten, der definierten Änderung des Lambda-Wertes entsprechenden Werteprofil in einer Vergleichsschaltung verglichen wird.

## Beschreibung

Die Erfindung betrifft eine Anordnung zur Überwachung der Funktionsfähigkeit von Lambda-Sonden in Entgiftungsanlagen für Abgas.

Ähnliche Anordnungen sind insbesondere für das Abgas von Verbrennungsmotoren in einer Vielzahl von Ausführungsformen bekannt (z. B. DE 23 04 464 C2).

Diese bekannten Anordnungen bergen die Nachteile in sich, dass sie nicht hinreichend zuverlässig die Funktionsfähigkeit überwachen können, da eine indirekte Messung entweder mit zwei Lambda-Sonden (DE 40 39 429) oder mittels Temperatursonden erfolgt. Insbesondere ist eine zuverlässige Feststellung der Funktionsfähigkeit bei gealterten Katalysatoren aufgrund der nicht mehr mit der Sauerstoffspeicherkapazität korrelierenden Umsatzrate an Kohlenwasserstoffen und anderen Schadstoffen nicht möglich.

Es ist außerdem eine Vorrichtung bekannt (DE 42 11 116), mit der zur Feststellung der Funktionsfähigkeit des Katalysators der Lambdawert eines Gemisches so moduliert wird, dass sich periodisch ein Sauerstoffüberschuss mit einem Sauerstoffmangel abwechseln. Anhand der Sprungreaktion einer in Strömungsrichtung hinter dem Katalysator angeordneten Lambdasonde wird die Funktionstüchtigkeit bzw. das Maß für die Konvertierungsfähigkeit des Katalysators detektiert. Nachteilig ist auch hier die indirekte Ermittlung einer Aussage über die Funktion des Katalysators.

Aus EP-A 0 530 655 ist ein ähnliches Verfahren zur Regelung eines Ottomotors bekannt. Bei der Regeleinrichtung sind mindestens zwei verschiedene Sensoren in einer Sensoreinheit nach dem Katalysator angeordnet. Mit der Sensoreinheit werden die unmittelbar aus dem Motor kommenden Gasbestandteile nach Durchlauf des Gases durch den Katalysator ausgewertet.

Aus EP-A 0 609 527 ist es bekannt, den Abgasstrom gegenüber dem normalen Betriebszustand gezielt zu ändern, diese Änderung zu erfassen und mit einem gespeicherten Parameter zu vergleichen. Als Messsonden werden hierfür Temperatursensoren oder Sauerstoffsensoren verwendet. Bei dem Verfahren wird ein Störzustand des Motors hervorgerufen, der zu einer Verschlechterung der Emission von Schadstoffen führt.

Der Erfindung liegt deshalb die Aufgabe zugrunde, eine eingangs charakterisierte Anordnung zuverlässiger sowie schnell reagierend auszubilden.

Diese Aufgabe wird erfindungsgemäß durch die Merkmale des Anspruchs 1 gelöst.

So wird also keine Lambda-Sonde oder ein Temperatursensor zur Überwachung, sondern ein Schadstoffsensor in Strömungsrichtung des Abgases in dem Katalysator angeordnet. Ferner wird eine schnelle, definierte Änderung der Last und/oder der Drehzahl eines Motors oder des Lambda-Wertes und/oder des Sauerstoffgehaltes im Abgas durchgeführt durch definiertes Abmagern oder Anreichern des Abgases von Verbrennungsmotoren als simulierte Störung des Katalysators nach einem bestimmten Schema oder Zyklus und das elektrische Ausgangssignal des Schadstoffsensors mit einem gespeicherten, der definierten Änderung des Lambda-Wertes entsprechenden Werteprofil verglichen. Liegt das elektrische Ausgangssignal innerhalb eines gewissen Toleranzbereiches zu dem gespeicherten Werteprofil, so wird davon ausgegangen, dass sich sowohl der Katalysator als auch die Lambda-Sonden in einem funktionierenden Zustand befinden. Liegen die Werte außerhalb eines Toleranzbereiches kann hierdurch mittelbar auf einen Fehler entweder des Katalysators oder aber der Lambda-Sonden geschlossen werden.

Es ist mit Vorteil auch möglich, den Schadstoffsensor zwischen zwei oder mehreren einzelnen Katalysatoren anzuordnen, weil dann die definierte Änderung höhere Werte der Emissionsspitzen erreicht, diese vergleichsweise höheren Konzentrationen jedoch in dem nachfolgenden Katalysator abgebaut werden können, so dass die Feststellung der Funktionsfähigkeit zu keinem höheren Schadstoffausstoß führt.

Zweckmäßige Ausgestaltungen und Weiterbildungen der Erfindung sind in den Unteransprüchen gekennzeichnet.

Ein Ausführungsbeispiel wird nachfolgend näher erläutert.

Es wird ein HC-Sensor in dem Katalysator angeordnet. Ferner wird eine schnelle, definierte Änderung der Last und/oder der Drehzahl eines Motors oder des Lambda-Wertes im Abgas durchgeführt durch definiertes Abmagern oder Anreichern des Abgases eines Verbrennungsmotors nach einem bestimmten Schema oder Zyklus und das elektrische Ausgangssignal des HC-Sensors mit einem gespeicherten, der definierten Änderung des Lambda-Wertes entsprechenden Werteprofil verglichen. Liegt das elektrische Ausgangssignal innerhalb eines gewissen Toleranzbereiches zu dem gespeicherten Werteprofil, so wird davon ausgegangen, dass sich die Lambda-Sonden in einem funktionierenden Zustand befinden. Liegen die Werte außerhalb eines Toleranzbereiches kann hierdurch mittelbar auf einen Fehler der Lambda-Sonden geschlossen werden.

Der HC-Sensor ist zwischen zwei einzelnen Katalysatoren angeordnet, weil dann die definierte Änderung höhere Werte der Emissionsspitzen erreicht, diese vergleichsweise höheren Konzentrationen jedoch in dem nachfolgenden Katalysator abgebaut werden können, so dass die Feststellung der Funktionsfähigkeit zu keinem höheren Schadstoffausstoß führt.

## Patentansprüche

1. Anordnung zur Überwachung der Funktionsfähigkeit von Lambda-Sonden in Entgiftungsanlagen für Abgas, wobei in dem Katalysator ein Schadstoffsensor angeordnet ist, wobei eine definierte Änderung des Lambda-Wertes und/oder des Sauerstoffgehaltes im Abgas von Verbrennungsmotoren von Kraftfahrzeugen motorisch durch schnelles Anreichern und/oder schnelles Abmagern durchgeführt wird, wobei das elektrische Ausgangssignal des Schadstoffsensors mit einem in einem Speicher gespeicherten, der definierten Änderung des Lambda-Wertes entsprechenden Werteprofil in einer Vergleichsschaltung verglichen wird und wobei als Schadstoffsensor ein HC-Sensor verwendet wird.

2. Anordnung nach Anspruch 1, dadurch gekennzeichnet, dass die Änderung als Zyklus einmal oder zyklisch durchlaufen wird.

3. Anordnung nach Anspruch 1 oder 2, dadurch gekennzeichnet, dass die definierte Änderung der Zusammensetzung des Abgases durch Änderung der Drehzahl und/oder des Lambda-Wertes und/oder der Last des Motors bewirkt wird.
